# EUROPEAN PATENT APPLICATION

(11) **EP 0 650 008 A1**
(43) Date of publication of application: **26.04.1995**
(21) Application number: 94500161.8
(22) Date of filing: 04.10.1994
(51) Int. Cl.: F16P 1/02, B01F 15/00

(54) **Protective screen moving device applicable to industrial mixers and similar equipment**

(30) Priority: 06.10.1993 ES 9302633
(71) Applicant: SAMMIC, S.A., E-20009 San Sebastian (Guipuzcoa) (ES)
(72) Inventor: Javier, Hidalgo Garcia, E-20400 Tolosa (Guipuzcoa) (ES)
(74) Representative: Riera Blanco, Juan Carlos

(57) **Abstract**

A device for moving protective screens, applicable to industrial mixers and similar equipment, composed of a boiler installed on a boiler support and fitted with a protective screen, the boiler support and the protective screen being movable by a boiler lifting lever attached to a shaft which in turn is attached to a set of short connecting rods which engage a set of long connecting rods joined to two supporting pins for guiding the upward motion of the boiler, and having a microswift acting in conjunction with two guide pins in the protective screen, characterized by the device being fitted with two guide members (12) with two flexible cables (13) extending therethrough to engage the upper ends of the guide pins (10) and the supporting pins (11), the protective screen and the boiler being movable by means of the lever (4).

## Description

### PURPOSE OF THE INVENTION

The present invention relates to a utility model involving a mechanism for moving protective screens, applicable to industrial mixers and similar equipment, the obvious purpose being to provide motion to a protective screen installed on a boiler facility incorporating an industrial or household mixer, thereby avoiding possible harm to the operator's hands during operation of the mixer as a result of the protective screen not being in place.

### FIELD OF THE INVENTION

This invention is applicable to the field of industrial mixers and similar products.

### BACKGROUND OF THE INVENTION

Facilities designed to aid in the operation of raising and lowering a boiler on which mixing operations are carried out, homogenized by the use of mixers, are known to be in use for a long time.

The specific function of this operation is to facilitate the introduction or removal of the tools used for the above activity, as well as emptying or extracting the boiler itself.

Generally speaking, the mechanisms used are manually operated through a lever acting on a shaft which causes the protective screen to be raised or lowered, acting in conjunction with two sets of short and long connecting rods, the latter being drawn by the short rods. The long rods engage two guide members which are thus moved to a vertical position, thereby drawing on the boiler and boiler support.

Recent European safety regulations compulsorily require manufacturers of this type of machinery to incorporate a safety screen to prevent the operator access inside the boiler facility while the mixer is in operation.

The first screens to appear on the market were hand operated, i.e. the lever was first handled to raise or lower the boiler and then the separating screen was opened or closed, although this was never done while the mixer was in operation.

All movable screens installed in this type of facility are fitted with a microswitch designed to stop the mixer automatically in the event that the screen is opened, thus preventing the operator from inadvertently putting his hands inside the facility with the mixer in operation. This means that when the screen is not in place in the closed position, the mixer is off.

In view that this operation is considered to be time consuming, many operators disconnect the mechanism and consequently work without the benefit of the protective screen device.

The obvious solution to the current problem is to provide a fully simplified mechanism for driving the protective screen, applicable to industrial mixers and similar equipment, designed to avoid the trouble of operating the assembly, the device itself being protected against disconnection.

However, there is no knowledge to this date that a device exists that is simple to operate and is efficient for the intended purpose.

### DESCRIPTION OF THE INVENTION

This device for operating protective screens according to the invention, applicable to industrial mixers and similar equipment, provides an evident solution to the current problem, proposing a clear, precise form of efficient operation of the assembly, its technical features making it impossible for the protective screen to be removed from its operating position.

More specifically, this device for operating protective screens, applicable to industrial mixers and similar equipment, is designed to operate with a boiler installed on a boiler support and fitted with a protective screen and a lever for raising the boiler. When the boiler approaches the screen, the device allows the mixer to be turned on, which otherwise would not be activated. The boiler is raised or lowered by a driving shaft in conjunction with two sets of connecting rods, one short and one long, provided with two pins acting as guide pins for raising the boiler and fitted with a microswitch by means of which the mixer is turned on when the boiler approaches the screen; consequently, in a reverse operation, the microswitch turns the mixer off when boiler and screen become separated from one other.

The above mentioned device acts as follows:

When the lever is handled to raise the boiler, the shaft rotates 90 degrees together with the two sets of short and long connecting rods. The resulting upward movement of the guide pins, the support pins, the boiler support and the boiler allows the microswitch to turn the mixer on, as the boiler approaches the protective screen.

This upward motion causes two flexible cables located on guide members to slide down, pushing down the guide pins attached to the protective screen, thereby causing the screen to be lowered.

When the boiler mechanism movement is downward, the supporting pins pull on the flexible cables in an upward sliding motion of the guide pins, thereby causing the screen to be raised.

The microswitch works in much the same way as in conventional facilities, acting as a safety device which turns the mixer on and off.

### DESCRIPTION OF THE DRAWINGS

In order to complete the present description and as an aid to a better understanding of the characteristics of the invention, four sheets of drawings are attached to this specification, being an integral part thereof, in which the following is shown for illustrative, non-limiting purposes:

Figure 1 shows a perspective view of the object of the invention, concerning a device for moving protective screens applicable to industrial mixers and similar equipment.

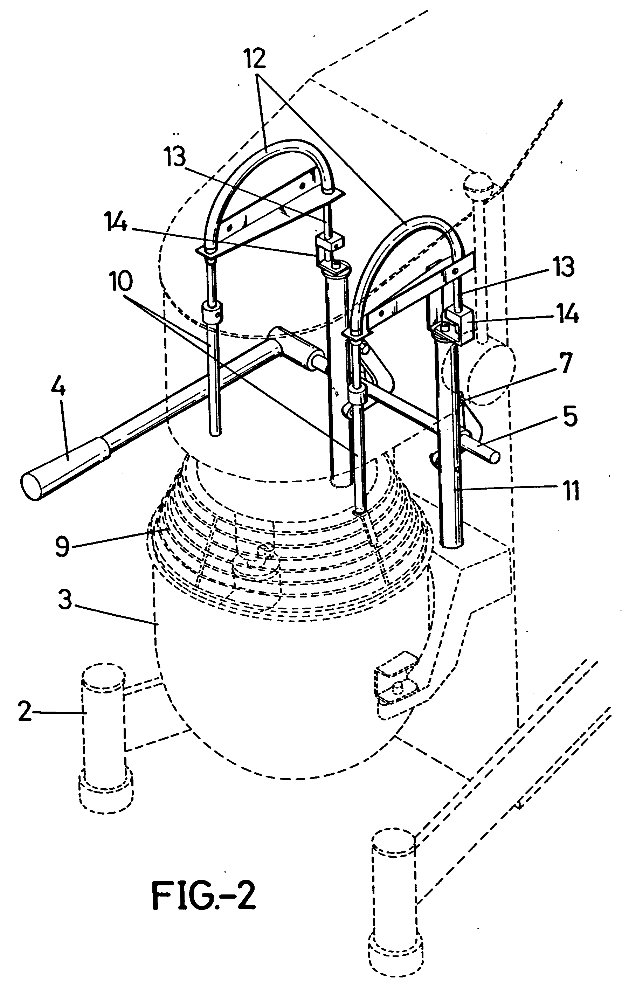

Figure 2 shows the object illustrated in Figure 1, in perspective view, with the lever in lowered position and therefore with the boiler in operating position, namely allowing the mixer to be operative.

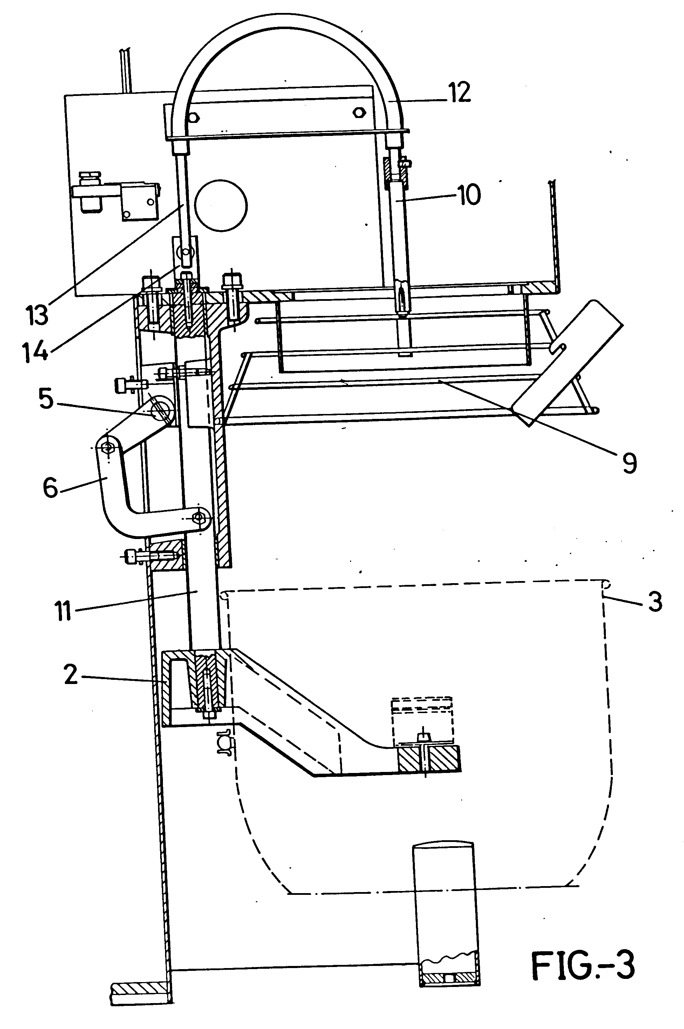

Figure 3 shows the object illustrated in the preceding drawings with the boiler in resting position, namely separated from the protective screen and consequently preventing the mixer from being operative.

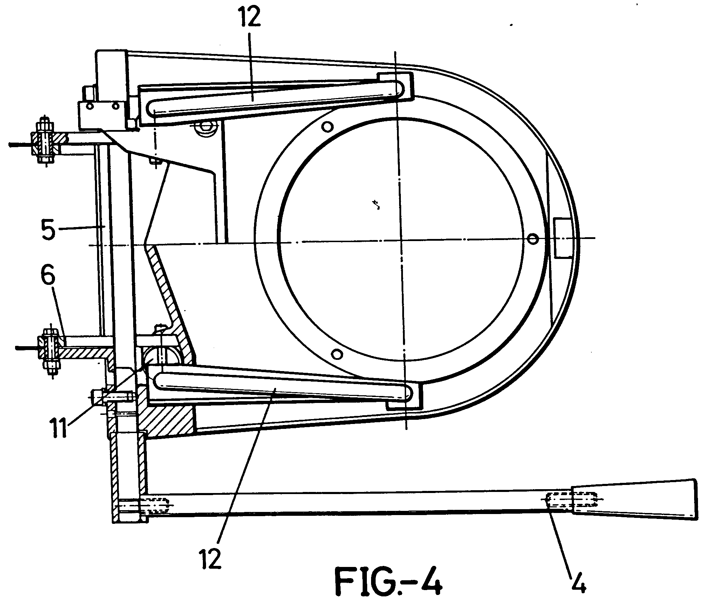

Figure 4 is a top view of the object illustrated in the preceding drawings.

### PREFERRED EMBODIMENT OF THE INVENTION

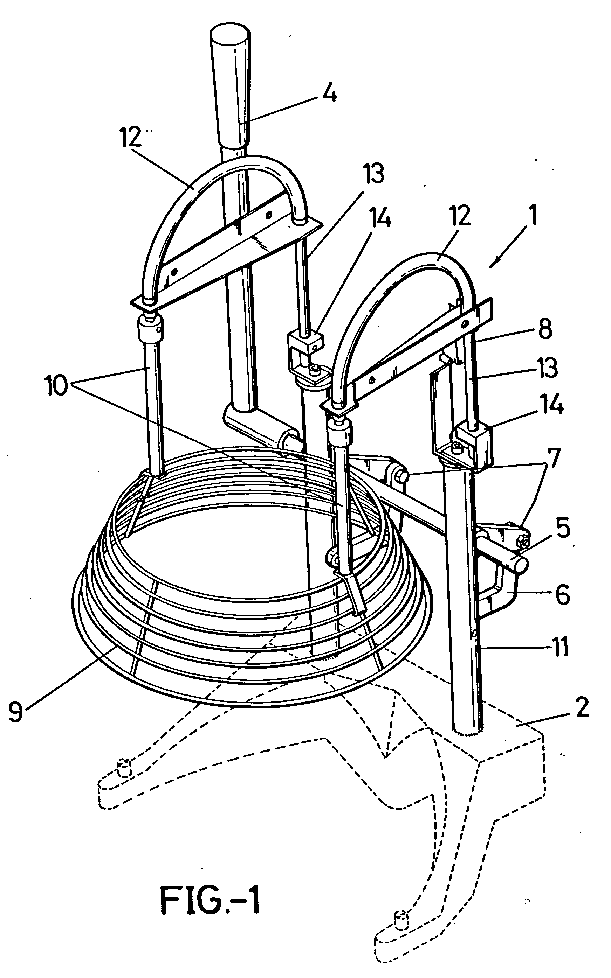

Based on the above drawings, and specifically on Figure 1, it can be seen that the protective screen moving device, applicable to industrial mixers and similar equipment (1), is composed of a boiler (3) seated on a boiler support (2) fitted with a lever (4) on one side of it, attached to a shaft (5) which is in turn attached to a set of short connecting rods (7) which engage a set of long connecting rods (6) fixed to two guide pins (7) designed to control the upward motion of the boiler, said guide pins, when lever (4) is acted upon, making the boiler (3) to be raised gradually until it reaches the lower perimeter of the protective screen (9), thereby providing the adequate spacing for the microswitch to activate the mixer.

When lever (4) is handled to raise the boiler (3), shaft (5) rotates 90 degrees together with the short connecting rods (7), attached to the long connecting rods (6) which in turn are attached to supporting pins (11). The rotation of shaft (5) and short connecting rods (7) causes an upward movement of the long connecting rods (6), the supporting pins (11), the boiler support (2) and, consequently, the boiler (3).

This upward movement causes a sliding effect of the flexible cables (13) over guide members (12), pushing the guide pins (10) attached to the protective screen (9) - and consequently the screen itself - downward.

When the boiler moving device moves downward, the supporting pins (11) draw on the flexible cables (13), causing an upward sliding of the guide pins (10) and consequently of the protective screen (9).

As the protective screen (9) becomes separated from the boiler (3), the microswitch (8) prevents the mixer from being operative.

This description need not be more extensive for anyone experienced in the art to understand the scope of the invention and the advantages deriving from it.

The materials, shape, size and disposition of the components may be varied provided the essence of the invention remains unaltered.

The terms of this specification should in all circumstances be used in a broad sense, not in a limiting sense.

## Claims

1. A device for moving protective screens, applicable to industrial mixers and similar equipment, composed of a boiler installed on a boiler support and fitted with a protective screen, the boiler support and the protective screen being movable by a boiler lifting lever attached to a shaft which in turn is attached to a set of short connecting rods which engage a set of long connecting rods joined to two supporting pins for guiding the upward motion of the boiler, and having a microswitch acting in conjunction with two guide pins in the protective screen, characterized by the device being fitted with two guide members (12) with two flexible cables (13) extending therethrough to engage the upper ends of the guide pins (10) and the supporting pins (11), the protective screen and the boiler being movable by means of the lever (4).

2. A device for moving protective screens according to claim 1, applicable to industrial mixers and similar equipment, characterized by the upward movement of the supporting pins (11) engaging the boiler support (2), which causes a sliding motion of the flexible cables (13) through the guide members (12), pushing the guide pins (10) attached to the protective screen (9) downward, thus lowering the screen.

3. A device for moving protective screens according to the preceding claims, applicable to industrial mixers and similar equipment, characterized by the downward movement of the boiler (3) moving mechanism, which causes the supporting pins (11) to draw on the flexible cables (13), resulting in an upward sliding motion of the guide pins (10) and consequently of the protective screen (2).
